# EUROPEAN PATENT SPECIFICATION

(11) **EP 0 780 716 B1**
(45) Date of publication and mention of the grant of the patent: **28.08.2002**
(21) Application number: 95309483.6
(22) Date of filing: 22.12.1995
(51) Int. Cl.: G02B 26/10

(54) **Drive motor for rotating multi-faceted mirror**
Antriebsmotor für rotierenden Polygonspiegel
Moteur d'entraînement d'un miroir tournant polygonal

(43) Date of publication of application: 25.06.1997
(73) Proprietor: SAMSUNG ELECTRONICS CO., LTD., Suwon-City, Kyungki-do (KR)
(72) Inventor: Lee, Chang-Woo, Suwon-city, Kyungki-do (KR)
(74) Representative: Neill, Alastair William

(56) References cited:
- EP-A- 0 598 950
- DE-A- 3 639 678
- DE-A- 3 733 117
- PATENT ABSTRACTS OF JAPAN vol. 18, no. 90 (M-1560), 15 February 1994 & JP-A-05 296248 (SUMITOMO ELECTRIC), 9 November 1993,
- PATENT ABSTRACTS OF JAPAN vol. 8, no. 140 (M-305), 29 June 1984 & JP-A-59 037328 (HATA GIKEN), 29 February 1984,

## Description

### Background of the Invention

The present invention relates to a drive motor for rotating a multi-faceted mirror, and more particularly, to a drive motor for rotating a multi-faceted mirror, which is used to change the path of a laser beam in a laser printer or a laser scanner.

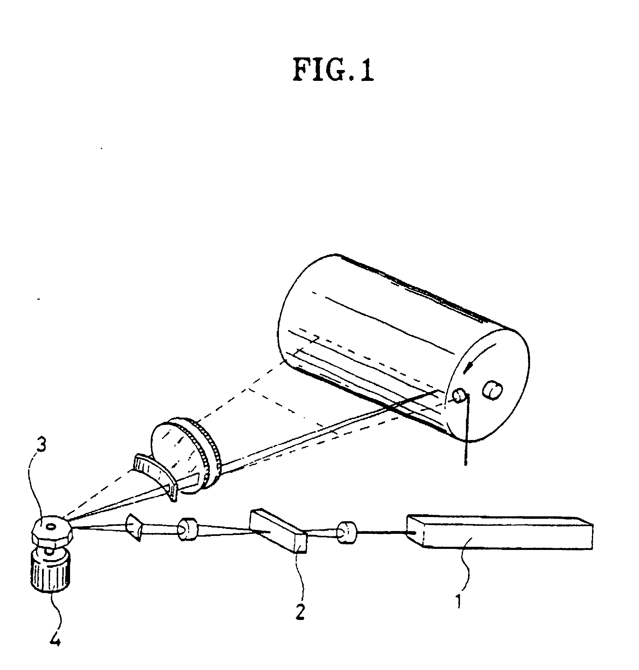

An optical data processing device such as a laser printer or a laser scanner has been developed to process optical data on a large scale. The optical data processing device for printing or scanning a large amounts of data at high speed is comprised of a laser 1 with excellent convergence, a high-speed beam deflector 2, rotating a multi-faceted mirror 3, and a drive motor 4 for rotating multi-faceted mirror 3, as shown in FIG. 1.

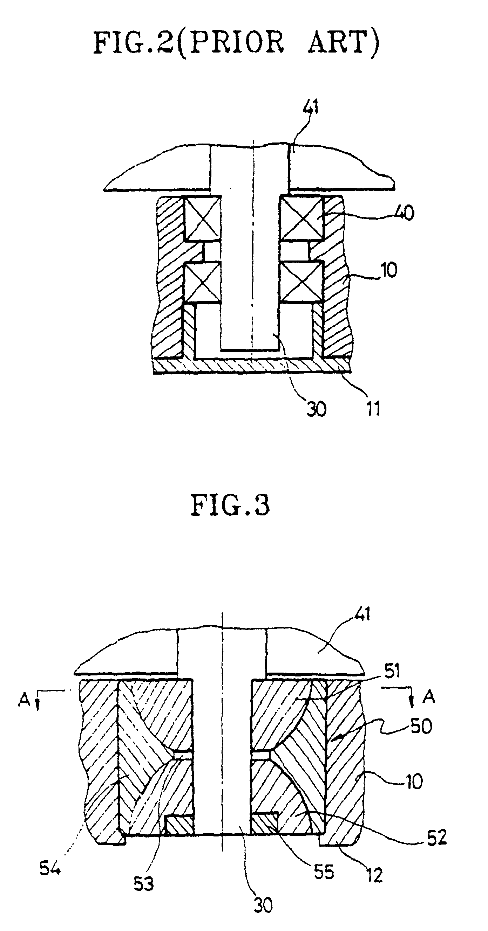

FIG. 2 is a simplified view of a bearing portion of a conventional drive motor for rotating a multi-faceted mirror. As shown in FIG. 2, a pair of upper and lower ball bearings 40 are disposed between a bearing housing 10 and a shaft 30 fixed to a rotor 41 of the motor. Here, reference numeral 11 denotes a bearing cover.

There are no problems during printing or scanning with drive motors having ball bearings 40 installed herein, as long as the printer or scanner operates at a low speed. However, significant problems occur when the printer or scanner operates at a high speed. That is, if printing or scanning is performed by rotating multi-faceted mirror 3 at above speeds of 20,000 RPM, there is significant shaking and noise in the ball bearings 40, which are contact-type bearings.

The patent document EP 0 598 950 A1 describes a rotary mirror system for angularly deflecting a light beam, the system comprising a single hemispherical air bearing rotatably supporting a mirror body on which one or more mirror facets are provided, said mirror body being the rotor of an electric motor.

### Summary of the Invention

The object of the present invention is to provide a drive motor for rotating a multi-faceted mirror, in which an improved bearing is used to efficiently reduce shaking and noise when an optical data processing device such as a laser printer or a laser scanner prints or scans.

To achieve the above object, there is provided a drive motor for rotating a multi-faceted mirror, comprising a stator, a rotor, and a bearing disposed between the stator and the rotor, for supporting the rotation of the rotor, the bearing being a hemispherical fluid bearing, and characterised in that said hemispherical fluid bearing comprises an upper inner ring and a lower inner ring which are hemispherical and fitted with a shaft fixed to said rotor to face each other, and an outer ring held in said stator, for supporting the rotation of said upper inner ring and said lower inner ring.

At least one of the inner rings and the outer ring has a first film coating of either titanium or ceramic formed on the lubricating surface thereof. The outer ring is formed of ceramic. In addition to the above first film coating, there is a second film coating of a diamond-like-carbon formed thereon.

### Brief Description of the Drawings

The above object and advantages of the present invention will become more apparent by describing in detail a preferred embodiment thereof with reference to the attached drawings in which:
FIG. 1 is a simplified schematic view of a typical laser printer;
FIG. 2 is a sectional view of a bearing portion in a conventional drive motor for rotating a multi-faceted mirror;
FIG. 3 is a sectional view of a bearing portion in a drive motor for rotating a multi-faceted mirror according to the present invention; and
FIG. 4 is a sectional view taken along plane A-A of FIG 3.

### Detailed Description of the Invention

As shown in FIG. 3, the structure of a drive motor for rotating a multi-faceted mirror according to the present invention is similar to that of the conventional drive motor for rotating a multi-faceted mirror in FIG. 2. The drive motor for rotating the multi-faceted mirror is comprised of a rotor 41 for rotating a multi-faceted mirror (not shown in FIG.3), a stator (not shown) disposed around rotor 41 for electrically interacting with rotor 41 so that rotor 41 rotates, a motor shaft 30 inserted into rotor 41, a bearing 50 through which a motor shaft 30 is fitted for supporting motor shaft 30 as it rotates, and a bearing housing 10 for holding bearing 50. Here, unlike the conventional ball bearing, bearing 50 is a hemispherical fluid bearing.

Hemispherical fluid bearing 50 has an upper inner ring 51 and a lower inner ring 52, each hemispherical in shape, fixed to shaft 30 with the spherical sides of the rings facing each other, an outer ring 54 fixed in bearing housing 10 for supporting inner rings 51 and 52 as they rotate, a spacer 53 disposed between upper inner ring 51 and lower inner ring 52, for maintaining clearance between outer ring 54 and inner rings 51 and 52, and a ring 55 for holding upper inner ring 51 and lower inner ring 52 on motor shaft 30. Here, ring 55 may be forcibly fitted or be screw-combined with motor shaft 30. In FIG. 3, reference numeral 12 denotes a housing shoulder for keeping bearing 50 from sliding down along shaft 30.

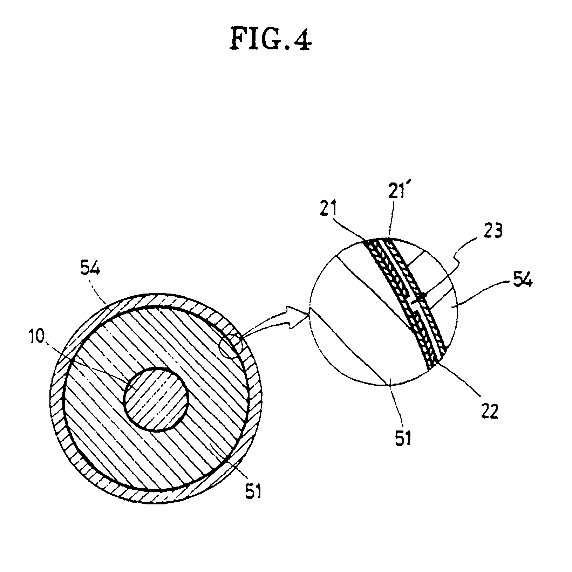

Referring to FIG. 4, upper inner ring 51 and lower inner ring 52 (not shown in FIG. 4) formed mainly of high carbon steel or tungsten cobalt (WCo) are coated with a 5-20 µ*m* thick titanium (Ti) film 21. Similarly, the lubricating surface of outer ring 54 is formed mainly of high carbon steel or WCo and is coated with a 5-20µ*m* thick Ti film 21'. Ti film coatings 21 and 21' can be replaced with a ceramic coating, for example, an Al₂o₃ coating. In addition, upper inner ring 51, lower inner ring 52, and outer ring 54 may all be formed of ceramic.

The film coating serves to alleviate abrasion between outer ring 54 and upper inner ring 51, and between outer ring 54 and lower inner ring 52, which is caused by solid friction therebetween when a motor starts or stops, namely, at or below a threshold speed.

On the other hand, to further reduce the abrasion caused by the solid fraction, a diamond-like-carbon (DLC) film of 5-10µ*m* is coated on Ti film coating 21 of upper ring 51 and lower inner ring 52. Since DLC coating 22 has a linear expansion coefficient similar to that of Ti film coating 21, the risk of flaking or a change in clearance is minimal. Further, the former is more resistant to friction than the latter, thus more it can more efficiently alleviate the impact of the solid friction.

A groove 23 is formed in DLC film coating 22. Groove 23 may reach Ti film coating 21 through DLC film coating 22 depending on the thickness of DLC film coating 22. Groove 23 lifts upper inner ring 51 and lower inner ring 52 away from outer ring 54 by generating oil pressure or air pressure when they rotate. Further, DLC film coating 22 and groove 23 may be provided to outer ring 54.

An embodiment of a method for manufacturing the above hemispherical fluid bearing will be described, in detail. Upper inner ring 51 and lower inner ring 52 formed mainly of high carbon or WCo are lapping-machined to have an out-of-sphericity of 0.15-0.25 µ*m*, and their spherical surfaces are coated with a 5-20 µ*m* thick Ti film. Then, a 5-10 µ*m* thick DLC film is coated on the Ti film.

A Ti ion beam projection method or a Ti gas deposition method can be used for coating the Ti film. The Ti film can be replaced with a ceramic film which is deposited by the same method.

The lubricating surface of outer ring 54 is coated with a Ti film or a ceramic film to a thickness of 5-20 µ*m*.

Thereafter, groove 23 is formed in DLC film coating 22 by a chemical corrosion method or an electrical discharge machining method.

The above hemispherical fluid bearing is assembled into a drive motor in the following sequence. First, upper inner ring 51 is fixed to motor shaft 30 by, for example, shrinkage fitting, to prevent upper inner ring 51 form slipping from motor shaft 30. Then, spacer 53 is fitted with shaft 30, and outer ring 54 is inserted in bearing housing 10 by, for example, the shrinkage fitting. Lower inner ring 52 is fitted with shaft 30 in the same manner. Thereafter, ring 55 is forcibly fitted or screw-combined with motor shaft 30.

As described above, the drive motor for rotating a multi-faceted mirror according to the present invention can efficiently reduce oscillations and noise when a laser printer or a laser scanner prints or scans at high speed.

## Claims

1. A drive motor for rotating a multi-faceted mirror, comprising a stator, a rotor (41), and a bearing (50) disposed between said stator and said rotor (41) for supporting the rotation of said rotor (41), the bearing (50) being a hemispherical fluid bearing, **characterised in that** said hemispherical fluid bearing comprises an upper inner ring (51) and a lower inner ring (52) which are hemispherical and fitted with a shaft (30) fixed to said rotor (41) to face each other, and an outer ring (54) held in said stator, for supporting the rotation of said upper inner ring (51) and said lower inner ring (52).

2. A drive motor for rotating a multi-faceted mirror as claimed in claim 1, wherein at least one of said inner rings (51) and said outer ring (54) has a first film coating (21,21') of one of titanium and ceramic formed on the lubricating surface thereof.

3. A drive motor for rotating a multi-faceted mirror as claimed in claim 2, wherein said outer ring (54) is formed of ceramic.

4. A drive motor for rotating a multi-faceted mirror as claimed in claim 2, wherein a second film coating (22) of a diamond-like-carbon is formed on said first film coating.

5. A drive motor for rotating a multi-faceted mirror as claimed in claim 4, wherein a predetermined groove (23) is formed in said second film coating (22).

6. A drive motor for rotating a multi-faceted mirror as claimed in claim 5, wherein said groove (23) extends to said first film coating (21,21').

7. A drive motor for rotating a multi-faceted mirror as claimed in claim 4, wherein said first film coating (21,21') is 5-20 µ*m* thick.

8. A drive motor for rotating a multi-faceted mirror as claimed in claim 4, wherein said second film coating (22) is 5-10 µ*m* thick.

9. A drive motor for rotating a multi-faceted mirror as claimed in claim 5, wherein said second film coating (22) is 5-10 µ*m* thick.

## Patentansprüche

1. Antriebsmotor zum Drehen eines mehrfach-facettierten Spiegels, aufweisend einen Stator, einen Rotor (41) und ein Lager (50), angeordnet zwischen dem Stator und dem Rotor (41) zum Unterstützen der Drehung des Rotors (41), wobei das Lager (50) ein hemisphärisches Fluidtager ist, **dadurch gekennzeichnet, dass** das hemisphärische Fluidlager einen oberen, inneren Ring (51) und einen unteren, inneren Ring (52) aufweist, die hemisphärisch sind und passend mit einer Welle (30) befestigt sind, die an dem Rotor (51) befestigt ist, um einander gegenüberzuliegen, und einen äußeren Ring (54), gehalten in dem Stator, zum Stützen der Drehung des oberen, inneren Rings (51) und des unteren, inneren Rings (52), aufweist.

2. Antriebsmotor zum Drehen eines mehrfach-facettierten Spiegels nach Anspruch 1, wobei mindestens einer der inneren Ringe (51) und der äußere Ring (54) eine erste Filmbeschichtung (21, 21') aus Titan oder Keramik, gebildet auf der Schmieroberfläche davon, besitzt.

3. Antriebsmotor zum Drehen eines mehrfach-facettierten Spiegels nach Anspruch 2, wobei der äußere Ring (54) aus Keramik gebildet ist.

4. Antriebsmotor zum Drehen eines mehrfach-facettierten Spiegels nach Anspruch 2, wobei eine zweite Filmbeschichtung (22) aus diamantähnlichem Kohlenstoff auf der ersten Filmbeschichtung gebildet ist.

5. Antriebsmotor zum Drehen eines mehrfach-facettierten Spiegels nach Anspruch 4, wobei eine vorbestimmte Nut (23) in der zweiten Filmbeschichtung (22) gebildet ist.

6. Antriebsmotor zum Drehen eines mehrfach-facettierten Spiegels nach Anspruch 5, wobei sich die Nut (23) zu der ersten Filmbeschichtung (21, 21') hin erstreckt.

7. Antriebsmotor zum Drehen eines mehrfach-facettierten Spiegels nach Anspruch 4, wobei die erste Filmbeschichtung (21, 21') 5-20µm dick ist.

8. Antriebsmotor zum Drehen eines mehrfach-facettierten Spiegels nach Anspruch 4, wobei die zweite Filmbeschichtung (22) 5-10µm dick ist.

9. Antriebsmotor zum Drehen eines mehrfach-facettierten Spiegels nach Anspruch 5, wobei die zweite Filmbeschichtung (22) 5-10µm dick ist.

## Revendications

1. Moteur d'entraînement pour faire tourner un miroir à plusieurs facettes, comprenant un stator, un rotor (41) et un palier (50) disposé entre ledit stator et ledit rotor (41) pour supporter ledit rotor (41) en rotation, le palier (50) étant un palier fluide hémisphérique, **caractérisé en ce que** ledit palier fluide hémisphérique comporte une bague intérieure supérieure (51) et une bague intérieure inférieure (52) qui sont hémisphériques et munies d'un arbre (30) fixé audit rotor (41) pour être en regard l'une de l'autre, et une bague extérieure (54) retenue dans ledit stator, pour supporter ladite bague intérieure supérieure (51) et ladite bague intérieure inférieure (52) en rotation.

2. Moteur d'entraînement pour faire tourner un miroir à plusieurs facettes selon la revendication, dans lequel lesdites bagues intérieures (51) et/ou ladite bague extérieure ont un premier revêtement pelliculaire (21, 21') en titane ou en céramique formé sur la surface de lubrification de celles-ci.

3. Moteur d'entraînement pour faire tourner un miroir à plusieurs facettes selon la revendication 2, dans lequel ladite bague extérieure (54) est en céramique.

4. Moteur d'entraînement pour faire tourner un miroir à plusieurs facettes selon la revendication 2, dans lequel un second revêtement pelliculaire (22) en carbone analogue à du diamant est formé sur ledit premier revêtement pelliculaire.

5. Moteur d'entraînement pour faire tourner un miroir à plusieurs facettes selon la revendication 4, dans lequel une gorge prédéterminée (23) est formée dans ledit second revêtement pelliculaire (22).

6. Moteur d'entraînement pour faire tourner un miroir à plusieurs facettes selon la revendication 5, dans lequel ladite gorge (23) s'étend jusqu'audit premier revêtement pelliculaire (21, 21').

7. Moteur d'entraînement pour faire tourner un miroir à plusieurs facettes selon la revendication 4, dans lequel ledit premier revêtement pelliculaire (21, 21') a une épaisseur de 5 à 20 µm.

8. Moteur d'entraînement pour faire tourner un miroir à plusieurs facettes selon la revendication 4, dans lequel ledit second revêtement pelliculaire (22) a une épaisseur de 5 à 10 µm.

9. Moteur d'entraînement pour faire tourner un miroir à plusieurs facettes selon la revendication 5, dans lequel ledit second revêtement pelliculaire (22) a une épaisseur de 5 à 10 µm.
